# EUROPEAN PATENT APPLICATION

(11) **EP 4 629 565 A1**
(43) Date of publication of application: **08.10.2025**
(21) Application number: 23897322.6
(22) Date of filing: 25.10.2023
(51) Int. Cl.: H04L 12/22, H04L 12/28, H04L 67/289, G06F 21/55, H04L 9/40

(54) **DETECTION SYSTEM, DETECTION METHOD, AND PROGRAM**

(30) Priority: 02.12.2022 JP 2022193259
(71) Applicant: Panasonic Intellectual Property Management Co., Ltd., Kadoma-shi, Osaka 571-0057 (JP)
(72) Inventor: YAMAMOTO, Masaya, Kadoma-shi, Osaka 571-0057 (JP); TSUTSUI, Tomoaki, Kadoma-shi, Osaka 571-0057 (JP); ODA, Tomohiro, Kadoma-shi, Osaka 571-0057 (JP); UJIIE, Yoshihiro, Kadoma-shi, Osaka 571-0057 (JP); HIRAISHI, Rikiya, Kadoma-shi, Osaka 571-0057 (JP); HAGA, Tomoyuki, Kadoma-shi, Osaka 571-0057 (JP)
(74) Representative: Grünecker Patent- und Rechtsanwälte PartG mbB
(86) International application number: PCT/JP2023/038562
(87) International publication number: WO 2024/116666

(57) **Abstract**

A detection system (10) includes: an internal communication monitor (12) that at least monitors a first communication performed from a terminal (22) to a device (21); a determiner (13) that determines whether the first communication monitored by the internal communication monitor (12) includes an attack made on the device (21) by the terminal (22); and an outputter (15) that outputs information indicating a result of the determining by the determiner (13). When the determiner (13) determines that the first communication is from the terminal (22) to an ephemeral port of the device (21), the determiner (13) determines that the first communication includes the attack.

## Description

### [Technical Field]

The present invention relates to a detection system, a detection method, and a program.

### [Background Art]

Internet of things (IoT), such as household electrical appliances, have been used. Furthermore, measures against security attacks made on IoT devices have been disclosed (see Patent Literature (PTL) 1, for example).

### [Citation List]

### [Patent Literature]

[PTL 1] Japanese Unexamined Patent Application Publication No. 2017-175462

### [Summary of Invention]

### [Technical Problem]

Unfortunately, a security attack made on an IoT device via communication can go undetected by a method of detecting a security attack made on, for example, a conventional server device.

In response to this, the present invention provides a detection system and so forth that appropriately detect a security attack made on a device via communication.

### [Solution to Problem]

A detection system according to an aspect of the present invention includes: a monitor that at least monitors a first communication performed from a terminal to a client device; a determiner that determines whether the first communication monitored by the monitor includes an attack made on the client device by the terminal; and an outputter that outputs information indicating a result of the determining by the determiner, wherein when the determiner determines that the first communication is from the terminal to an ephemeral port of the client device, the determiner determines that the first communication includes the attack.

The general or specific aspect described above may be realized by a device, a method, an integrated circuit, a computer program, or a computer-readable recording medium such as a Compact Disc Read-Only Memory (CD-ROM) or may be realized by any combination of the device, the method, the integrated circuit, the computer program, and the recording medium.

### [Advantageous Effects of Invention]

The detection system according to the present invention is capable of appropriately detecting a security attack made on a device via communication.

### [Brief Description of Drawings]

[FIG. 1]

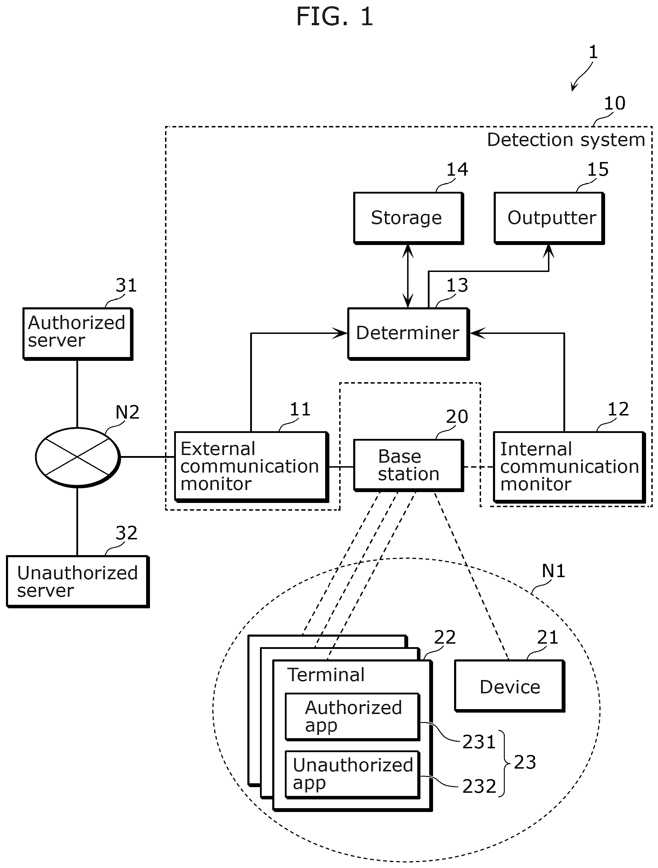

   FIG. 1 is an explanatory schematic diagram of a configuration of a detection system and a communication system that includes the detection system, according to Embodiment.
[FIG. 2]

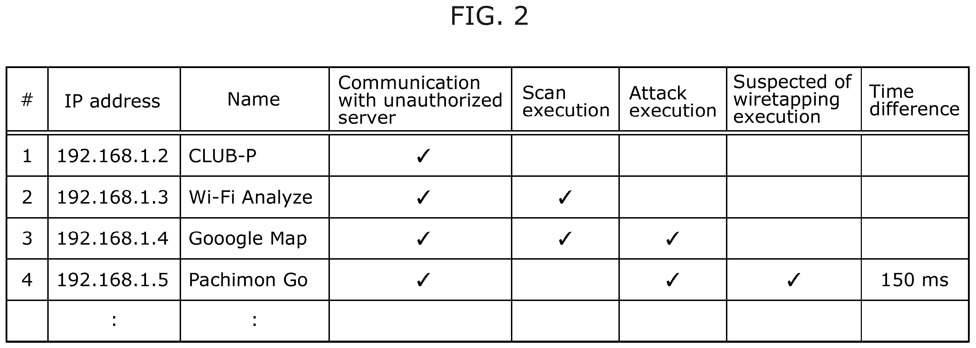

   FIG. 2 is an explanatory diagram illustrating an app list used by the detection system, according to Embodiment.
[FIG. 3]

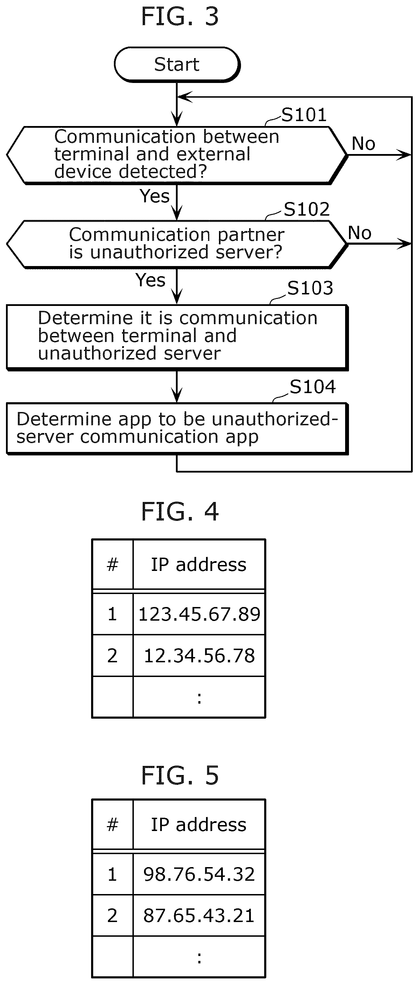

   FIG. 3 is a flowchart of processing relating to communication monitoring performed by the detection system, according to Embodiment.
[FIG. 4]
   FIG. 4 is an explanatory diagram illustrating an authorized-server list according to Embodiment.
[FIG. 5]
   FIG. 5 is an explanatory diagram illustrating an unauthorized-server list according to Embodiment.
[FIG. 6]

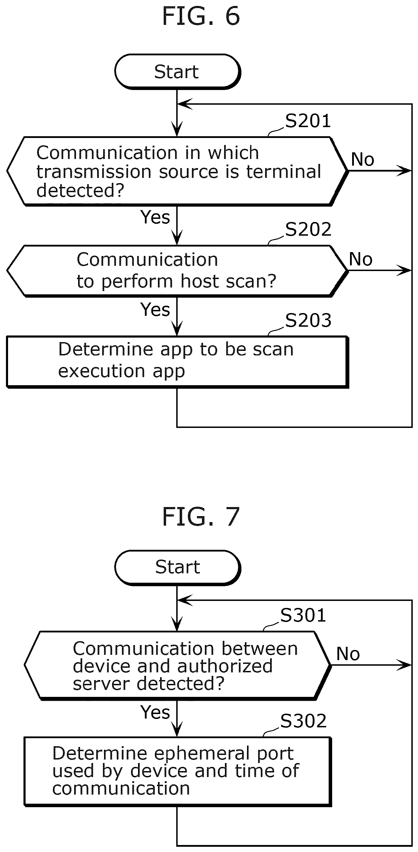

   FIG. 6 is a flowchart of processing performed by the detection system to detect a host scan, according to Embodiment.
[FIG. 7]
   FIG. 7 is a flowchart of processing performed by the detection system to determine an ephemeral port, according to Embodiment.
[FIG. 8]

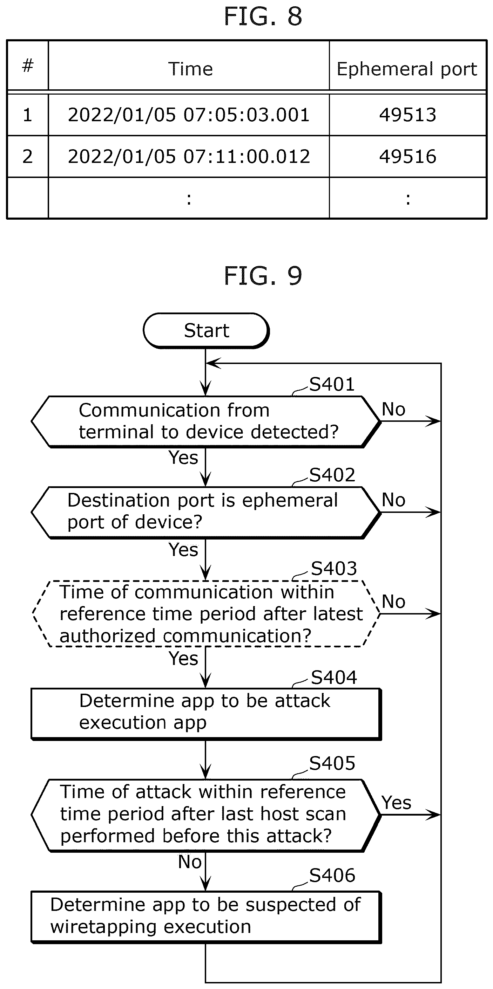

   FIG. 8 is an explanatory diagram illustrating ephemeral ports of a device according to Embodiment.
[FIG. 9]
   FIG. 9 is a flowchart of processing performed by an internal communication monitor to detect an attack and wiretapping, according to Embodiment.

### [Description of Embodiment]

### (Underlying Knowledge Forming Basis of the Present Invention)

In relation to the technology for security measures in the Background section, the inventors have found the following issue.

A conventional security attack on, for example, a server device is made by transmission of a communication packet (also referred to simply as a packet) to a transmission control protocol (TCP) port or a user datagram protocol (UDP) port (also referred to simply as a port) used by the server device for service provision. Note that a security attack is also commonly called a cyberattack.

The port used by the server device for service provision is basically managed as a well-known port by the Internet Assigned Numbers Authority (IANA), and is predetermined. For example, TCP port 80 is used by a hypertext transfer protocol (HTTP) server (or, a so-called web server) for service provision (that is, for web-page provision). Furthermore, TCP ports 20 and 21 are used by a file transfer protocol (FTP) server for service provision (that is, for file transfer and for control over the file transfer).

On this account, to detect a security attack made on a conventional server, it is useful to verify whether a communication device performs a communication that includes an attack against a well-known port of the server. To detect such a security attack, a system called a honeypot has been used. The honeypot is a system that detects a security attack by connecting a possible attack-target server device to the Internet and, while exposing this server device to an attacker from the Internet, monitoring communication performed on the aforementioned well-known port.

In recent years, IoT devices, such as household electrical appliances connected to networks, have been used. An IoT device is capable of operating by communicating with a terminal (a smartphone, for example) that controls the IoT device or with a server.

A security attack can possibly be made on the IoT device via communication. The security attack on the IoT device via the communication is made by application software (also referred to simply as an app) unauthorizedly installed on the terminal that controls the IoT device, or made by an unauthorized server, for example. Such a security attack causes the IoT device to perform an unauthorized operation. In response to this, the measures against security attacks on IoT devices have been disclosed (see PTL 1, for example).

However, the method of detecting a security attack on a conventional server may be unable to detect the security attack on the IoT device. The IoT device is connected to the server via a port (also commonly referred to as an ephemeral port or a dynamic port) that is temporarily used for connection to the server, instead of via a well-known port. For this reason, even when whether the communication device performs a communication that includes an attack on the well-known port of the IoT device is verified, the presence or absence of a security attack on the IoT device cannot be determined. Note that the port used as the ephemeral port is selected from among ports managed as ephemeral ports by the IANA.

In view of this, the present invention provides a detection system and so forth that appropriately detect a security attack made on a device via communication.

The following describes an example of the invention obtained from the disclosure of the present specification and also describes advantageous effects obtained from the invention.
(1) A detection system includes: a monitor that at least monitors a first communication performed from a terminal to a client device; a determiner that determines whether the first communication monitored by the monitor includes an attack made on the client device by the terminal; and an outputter that outputs information indicating a result of the determining by the determiner, wherein when the determiner determines that the first communication is from the terminal to an ephemeral port of the client device, the determiner determines that the first communication includes the attack.
   According to the aspect described above, when the communication is performed from the terminal to the ephemeral port of the client device, the detection system determines that the terminal has made a security attack (also referred to simply as an attack) on the client device. Thus, the detection system can detect the attack that is undetected even when the communication performed on a well-known port of the client device is monitored. In this way, the detection system is capable of appropriately detecting the security attack made on the device via the communication.
(2) The detection system according to (1), wherein the monitor further monitors a second communication that is from the client device to a communication device that is connected via an external network, and when the second communication includes a communication from the client device to a predetermined authorized server, the determiner further obtains, from the client device, a port of the client device that is used in the second communication, and determines, based on the port as the ephemeral port, whether the first communication includes the attack.
   According to the aspect described above, the detection system is capable of detecting the attack made by the terminal on the ephemeral port that is actually used by the client device to communicate with the authorized server. In this way, the detection system is capable of appropriately detecting the security attack made on the ephemeral port that is actually used by the device.
(3) The detection system according to claim (2), wherein the monitor further monitors a third communication between the terminal and a communication device that is connected via an external network, and the determiner further determines whether the third communication includes a communication performed from the terminal to an unauthorized server that is different from the predetermined authorized server, and determines that the third communication relates to the attack when the determiner determines that the third communication includes the communication performed from the terminal to the unauthorized server.
   According to the aspect described above, based on the communication performed on the unauthorized server by the terminal, it is detected that the terminal has performed the communication relating to the attack. This terminal that is detected to have performed the communication relating to the attack has a relatively high probability of making an attack on the client device. Thus, the detection system is capable of appropriately detecting the security attack made on the device via the communication.
(4) The detection system according to any one of (1) to (3), wherein the monitor further monitors an internal communication performed from the terminal to a destination having an address included in an internal network, and the determiner further determines whether the internal communication includes a packet relating to a host scan for the internal network.
   According to the aspect described above, the detection system is capable of detecting that the terminal has performed the host scan. This terminal that is detected to have performed the host scan has a relatively high probability of making an attack on the client device. This is because the communication device found by the host scan can possibly be targeted for an attack. Thus, as described above, the detection system is capable of more appropriately detecting the security attack made on the device via the communication.
(5) The detection system according to (4), wherein when the determiner determines that the first communication includes the attack and that the internal communication does not include the packet relating to the host scan, the determiner determines that the terminal is suspected of a wiretapping attack.
   According to the aspect described above, it is possible to detect that the terminal has made the attack on the client device without performing the host scan. This terminal is suspected of the security attack executed through communication wiretapping. Thus, the detection system is capable of more appropriately detecting the security attack made on the device via the communication.
(6) The detection system according to (2), wherein the monitor further monitors an internal communication performed from the terminal to a destination having an address included in an internal network, and the determiner further determines whether the internal communication includes a packet relating to a host scan for the internal network, and when the determiner determines that the first communication includes the attack, that the internal communication does not include the packet relating to the host scan, and that a time difference between the communication from the client device to the predetermined authorized server and the attack included in the first communication is within a reference time period, determines that the terminal is suspected of a wiretapping attack.
   According to the aspect described above, it is possible to detect that the terminal has made the attack on the client device without performing the host scan and that the terminal has made the attack on the client device within a relatively short time after the communication with the authorized server. This terminal is suspected of the security attack executed through communication wiretapping. Thus, the detection system is capable of more appropriately detecting the security attack made on the device via the communication.
(7) The detection system according to any one of (1) to (6), wherein application software for performing the first communication is installed on the terminal, and when the determiner determines that the first communication includes the attack, the determiner determines that the application software has a function of making an attack.
   According to the aspect described above, the detection system is capable of detecting the app that has made the attack on the client device. In this way, the detection system is capable of appropriately detecting the app that makes the security attack on the device via the communication.
(8) A detection method executed by a detection system to detect an attack, the detection method including: at least monitoring a first communication performed from a terminal to a client device; determining whether the first communication monitored in the monitoring includes an attack made on the client device by the terminal; and outputting information indicating a result of the determining, wherein in the determining, when it is determined that the first communication is from the terminal to an ephemeral port of the client device, it is determined that the first communication includes the attack.
   The above aspect produces the same advantageous effects as those produced by the above-described detection system.
(9) A program for causing a computer to execute the detection method according to (8).

The above aspect produces the same advantageous effects as those produced by the above-described detection system.

Each of the general or specific aspects described above may be realized by a device, a method, an integrated circuit, a computer program, or a computer-readable recording medium such as a CD-ROM or may be realized by any combination of the device, the method, the integrated circuit, the computer program, and the recording medium.

Hereinafter, certain exemplary embodiments will be described in detail with reference to the accompanying Drawings.

The following embodiments are general or specific examples of the present disclosure. The numerical values, shapes, materials, constituent elements, arrangement and connection configuration of the constituent elements, steps, the order of the steps, etc., described in the following embodiment are merely examples, and are not intended to limit the present disclosure. Among constituent elements in the following embodiment, those not described in any one of the independent claims indicating the broadest concept of the present disclosure are described as optional constituent elements.

### [Embodiment]

The following describes a detection system and so forth that appropriately detect a security attack made on a device via communication according to the present embodiment.

FIG. 1 is an explanatory schematic diagram of a configuration of detection system 10 and communication system 1 that includes detection system 10 according to the present embodiment.

Communication system 1 detects a security attack that can be possibly made on device 21 by terminal 22. Communication system 1 is first described.

As illustrated in FIG. 1, communication system 1 includes base station 20, device 21, and terminal 22. Communication system 1 is connected to authorized server 31 and unauthorized server 32 via network N2.

Base station 20 is a communication device that enables device 21 and terminal 22 to be communicatively connected to network N2. For example, base station 20 is an access point of a wireless local area network (wireless LAN) (such as Wi-Fi (registered trademark)) installed in a residence. This case is described as an example.

Base station 20 is connected to network N2 via a communication line (or more specifically, a wired LAN), and is wirelessly connected to device 21 and terminal 22. Base station 20 has a function of transferring packets sent and received between devices connected. Device 21 or terminal 22 occasionally communicates with authorized server 31 or unauthorized server 32 via network N2. Note that whether base station 20 is connected to device 21, terminal 22, and network N2 by wire or wirelessly is not limited to the example described above. To be more specific, base station 20 may be connected to device 21 or terminal 22 by wire (that is, by a communication line), and base station 20 may be connected to network N2 wirelessly.

Device 21 fulfills a function unique to device 21 while communicating with terminal 22 and authorized server 31 via base station 20. Device 21 corresponds to a client device. For example, device 21 is a household electrical appliance, such as an air purifier or a washing machine. Note that device 21 may be not only a household electrical appliance but also a client device connected to a typical server via communication.

Terminal 22 is an information terminal that provides device 21 with information via base station 20 to cause device 21 to operate. For example, terminal 22 is a smartphone, a tablet, or a personal computer. Terminal 22 includes application software (also referred to simply as app) 23 that runs on an operation system (OS). App 23 can be authorized app 231 or unauthorized app 232. Note that although the drawing shows that both authorized app 231 and unauthorized app 232 operate on terminal 22 for the purpose of description, at least one of authorized app 231 or unauthorized app 232 may operate on terminal 22.

Authorized app 231 collects information from device 21 or provides device 21 with an operation instruction or information. Note that authorized app 231 does not necessarily need to communicate directly with device 21. Authorized app 231 may collect the information from device 21 or provide device 21 with the operation instruction or the information, via authorized server 31. In this case, authorized app 231 does not directly communicate with device 21 and thus communicates only with authorized server 31.

In contrast, unauthorized app 232 makes a security attack on device 21, for example. Examples of the security attack made by unauthorized app 232 can include: unauthorizedly collecting information from device 21 by disguising itself as authorized app 231 or authorized server 31 to communicate with device 21; and causing device 21 to malfunction by providing device 21 with an instruction or information for an unauthorized operation. Thus, detection system 10 may be a system that detects a security attack that can be made on device 21 by unauthorized app 232. In other words, unauthorized app 232 is targeted for determination made by detection system 10 as to whether unauthorized app 232 makes a security attack. It is possible to say that unauthorized app 232 is targeted for security-attack detection by detection system 10.

Note that the number of terminals 22 may be two or more.

Note that any number of unauthorized apps 232 may operate on terminal 22. However, it is useful to set the number of unauthorized apps 232 operating on terminal 22 at one because, when detection system 10 detects a security attack, this one unauthorized app 232 is identified as the app that makes the security attack. The present embodiment describes the example where the number of unauthorized apps 232 operating on terminal 22 is one.

Note that when the number of unauthorized apps 232 operating on terminal 22 is at least two and detection system 10 detects a security attack, at least one of the at least two unauthorized apps 232 operating on terminal 22 is identified as unauthorized app 232 that makes a security attack. For the case where a plurality of unauthorized apps 232 operating on one terminal 22 make a security attack collaboratively, detection system 10 is able to detect the security attack by keeping the plurality of unauthorized apps 232 operating on one terminal 22. For terminal 22 installed with single unauthorized app 232, this method is effective against unauthorized app 232 that avoids detection by detection system 10 by keeping itself hidden without making a security attack. Furthermore, this method is also effective when the presence of authorized app 231 triggers unauthorized app 232 to make a security attack.

Authorized server 31 controls operation of device 21 or provides device 21 with information. Authorized server 31 controls the operation of device 21 by providing device 21 with an instruction for normal operation of device 21 via communication. Furthermore, authorized server 31 obtains information on normal operation of device 21 with authorization, from device 21 via communication. Furthermore, authorized server 31 receives an operation instruction to device 21 for running authorized app 231, by communicating with authorized app 231. Furthermore, by providing authorized app 231 with the information on the operation obtained from device 21 with authorization, authorized server 31 is able to present the operation information on authorized app 231. Authorized server 31 is assumed to be prepared by a business operator that provides device 21 and authorized app 231.

Furthermore, authorized server 31 provides, via communication, information (for example, update information on firmware or an app of the terminal, or time information) used in operations of device 21 and authorized app 231. Authorized server 31 may be prepared by the business operator that provides device 21 and app 23, or may be prepared to provide information to a wide range of common terminals (such as a time server that provides time information to a wide range of common terminals according to the network time protocol (NTP)). Thus, a plurality of authorized servers 31 may be included corresponding to roles provided.

Unauthorized server 32 is different from authorized server 31. For example, unauthorized server 32 relates to operation of unauthorized app 232. This case is described as an example. In this case, unauthorized server 32 provides an instruction for unauthorized operation of unauthorized app 232 via communication with terminal 22. Furthermore, unauthorized server 32 obtains information on unauthorized operation of device 21 that is unauthorizedly obtained by unauthorized app 232, from terminal 22 via communication. Unauthorized server 32 corresponds to a server (a so-called command-and-control (C&C) server) that controls terminal 22 on which unauthorized app 232 operates. Unauthorized server 32 is assumed to be prepared by someone that is different from the business operator providing device 21 and authorized app 231 and that intentionally causes device 21 to perform an unauthorized operation.

Note that examples of unauthorized server 32 include a server different from a server registered as authorized server 31. On this account, the examples of unauthorized server 32 may include not only a server relating to an unauthorized operation of device 21 but also a server that is not registered as authorized server 31 (such as an app that is not intended to be widely used by ordinary people or an app that is not widely used by ordinary people).

Detection system 10 monitors communication on a communication line that connects base station 20 to network N2 and communication on network N1. Network N2 is a network outside the residence, and examples include the Internet. Network N1 is a network inside the residence. By monitoring the aforementioned communications, detection system 10 is able to detect a security attack that can be made by terminal 22 (or app 23), or more specifically, detect that app 23 is unauthorized app 232.

Detection system 10 is next described.

As illustrated in FIG. 1, detection system 10 includes functional sections as external communication monitor 11, internal communication monitor 12, determiner 13, storage 14, and outputter 15. Each of the functions of external communication monitor 11, internal communication monitor 12, determiner 13, and outputter 15 can be implemented in part or in whole by a processor (a central processing unit (CPU)) included in detection system 10 and executing a predetermined program using a memory.

External communication monitor 11 monitors external communication (also referred to as a second communication). The external communication refers to communication on the communication line that connects base station 20 to network N2. More specifically, the external communication refers to communication between device 21 or terminal 22 and authorized server 31 or unauthorized server 32. External communication monitor 11 is disposed on the communication line that connects base station 20 to network N2. External communication monitor 11 captures a packet transferred over the communication line and provides determiner 13 with captured data on the packet.

External communication monitor 11 corresponds to one function of a monitor. To be more specific, external communication monitor 11 corresponds to a monitor that monitors the communication (also referred to as the second communication) from device 21 to the communication device connected via network N2.

Internal communication monitor 12 monitors internal communication. The internal communication refers to communication performed wirelessly by base station 20 on network N1. More specifically, the internal communication refers to communication between base station 20 and device 21 or terminal 22. In other words, the internal communication refers to communication on network N1. Internal communication monitor 12 is disposed in a position where radio waves transmitted to or from base station 20 is receivable (or more specifically, a position in a region in which base station 20 is enabled to perform wireless communication). Internal communication monitor 12 captures a packet transmitted or received by device 21 or terminal 22 on network N1 and provides determiner 13 with captured data on the packet.

Internal communication monitor 12 corresponds to one function of the monitor. To be more specific, internal communication monitor 12 corresponds to a monitor that at least monitors communication (also referred to as a first communication) from terminal 22 to device 21.

Determiner 13 determines whether the communication monitored by external communication monitor 11 or internal communication monitor 12 includes a security attack. Determiner 13 obtains, from external communication monitor 11, the captured data on the packet transferred on the communication line that connects base station 20 to network N2. Moreover, determiner 13 obtains, from internal communication monitor 12, the captured data on the packet transmitted or received over network N1. Then, determiner 13 makes the aforementioned determination based on the captured data obtained.

To be more specific, when determining, based on the captured data on the packet transmitted or received over network N1, that the first communication is performed from terminal 22 to an ephemeral port of device 21, determiner 13 determines that the first communication includes the security attack. At this time, determiner 13 can also determine that app 23 installed on terminal 22 has a function of making a security attack.

An ephemeral port is commonly a TCP port or a UDP port of the communication device and is temporarily used when the communication device is connected to a server device according to the TCP or the UDP. The ephemeral port is selected from among ports with numbers within a predetermined range. This range is from 49152 to 65535 for example, and is managed by the IANA.

Furthermore, when determining whether the first communication includes an attack, determiner 13 can use the captured data on the packet transferred on the communication line that connects base station 20 to network N2. More specifically, when the communication from device 21 to authorized server 31 is included in the second communication, determiner 13 obtains the port of device 21 that is used in the second communication. Then, determiner 13 determines whether the first communication includes an attack, based on the port obtained as the ephemeral port.

Determiner 13 corresponds to a determiner that determines whether the first communication monitored by the monitor includes an attack made on device 21 by terminal 22.

Storage 14 is a volatile or nonvolatile storage device capable of storing information used in the processing performed by determiner 13 and information indicating a result of the determination made by determiner 13. For example, storage 14 is a random access memory (RAM), a hard disk drive (HDD), or a solid state drive (SSD).

Storage 14 stores an app list (see FIG. 2) as the information used in the processing performed by determiner 13 and the information indicating a result of the determination made by determiner 13. Furthermore, storage 14 stores a port list (see FIG. 8) indicating the ephemeral ports of device 21.

Outputter 15 outputs result information indicating the result of the determination stored in storage 14. The result information outputted by outputter 15 includes at least information indicating the presence or absence of the attack made by terminal 22 (see FIG. 2). Furthermore, the result information outputted by outputter 15 may include: the presence or absence of communication with the unauthorized server; the presence or absence of scan execution; the presence or absence of suspicion of wiretapping execution; or a time difference (see FIG. 2).

Outputter 15 includes a presentation device, for example, and presents the result information to the user via the presentation device. The presentation of the result information can include: displaying the result information on a display screen that is an example of the presentation device; or outputting the result information by voice from a loudspeaker that is an example of the presentation device. Note that outputter 15 may include a communication interface. In this case, outputter 15 may provide the result information to an external presentation device via the communication interface and then cause the external presentation device to present the result information.

As described above, the determination by determiner 13 that the first communication includes the security attack corresponds to the security attack detection by detection system 10. Furthermore, the determination by determiner 13 that app 23 has the function of making a security attack corresponds to the detection by detection system 10 that app 23 is unauthorized app 232.

Note that the functional sections of detection system 10 may be included in a single device or separately located in a plurality of devices. For the functional sections of detection system 10 that are separately located in the plurality of devices, the information is transmitted or received via the communication interface between devices that need the information.

FIG. 2 is an explanatory diagram illustrating the app list used by detection system 10, according to Embodiment. The app list illustrated in FIG. 2 indicates at least one app that is targeted for security attack detection by detection system 10. In other words, this app list indicates an app that is targeted for detection as to whether the app makes a security attack. The app list is stored in storage 14. The content of the app list can be updated by determiner 13.

The app list illustrated in FIG. 2 shows, for each of the at least one app: internet protocol (IP) address; name; the presence or absence of communication with unauthorized server; the presence or absence of scan execution; the presence or absence of attack execution; the presence or absence of suspicion of wiretapping execution; and time difference.

The IP address indicates an IP address of terminal 22 that is installed with the present app. Note that an identifier that uniquely identifies terminal 22 can be used instead of the IP address.

The name indicates a name of the present app. The name refers to attached textual information on the app.

The presence or absence of communication with the unauthorized server is information indicating whether the present app has communicated with unauthorized server 32. When determiner 13 determines that terminal 22 installed with the present app has communicated with unauthorized server 32, the information on the presence or absence of communication with the unauthorized server is updated to information indicating that the present app has communicated with unauthorized server 32 (that is, the information indicating the presence of communication with unauthorized server 32). Although the information indicating the presence of communication with unauthorized server 32 is indicated by a checkmark in FIG. 2, the form of the information is not limited to this. Likewise, the forms of information described later are not intended to be limiting.

Note that the presence or absence of communication with the unauthorized server merely indicates the result of the determination by determiner 13. Thus, from this information, the server with which the app has communicated cannot be determined to be an unauthorized server.

The presence or absence of scan execution is information indicating whether the present app has executed a host scan. When determiner 13 determines that terminal 22 installed with the present app has executed the host scan, the information on the presence or absence of scan execution is updated to information indicating that the present app has executed the host scan (that is, information indicating the presence of scan execution).

The presence or absence of attack execution is information indicating whether the present app has executed a security attack. When determiner 13 determines that terminal 22 installed with the present app has executed the security attack, the information on the presence or absence of attack execution is updated to information indicating that the present app has executed the security attack (that is, the information indicating the presence of attack execution).

The presence or absence of suspicion of wiretapping execution is information indicating whether the present app is suspected of wiretapping the communication. When determiner 13 determines that terminal 22 installed with the present app is suspected of wiretapping the communication, the information on the presence or absence of suspicion of wiretapping execution is updated to information indicating that the present app is suspected of wiretapping the communication (that is, the information indicating the presence of suspicion of wiretapping execution).

The time difference indicates, when the present app is suspected of wiretapping the communication, a difference between a time of authorized communication and a time of attack execution.

Determiner 13 updates the information of the app list according to the result of the determination made based on the captured data. The content of the app list at the time when determiner 13 finishes the determination indicates the result of the determination by detection system 10.

To be more specific, the app list illustrated in FIG. 2 includes four apps with numbers #1 to #4.

**App** #1 has the name "CLUB-P" and is installed on terminal 22 having the IP address "192.168.1.2". Determiner 13 determines that app #1 communicates with an unauthorized server. App #1 is an example of an app used in information exchange in a group of people or an organization. App #1 is not intended to be widely used by ordinary people and is an example of an unknown server that is not registered as authorized server 31.

App #2 has the name "Wi-Fi Analyze" and is installed on terminal 22 having the IP address "192.168.1.3". Determiner 13 determines that app #1 communicates with an unauthorized server and that app #1 has executed a host scan. App #2 is a tool for analyzing Wi-Fi communication. App #2 is not intended to be widely used by ordinary people and is intended to be used by a person with knowledge and skills relating to communication.

App #3 has the name "Gooogle Map" and is installed on terminal 22 having the IP address "192.168.1.4". Determiner 13 determines that app #3 communicates with an unauthorized server and that app #3 has executed a host scan and also has executed a security attack.

App #4 has the name "Pachimon Go" and is installed on terminal 22 having the IP address "192.168.1.5". Determiner 13 determines that app #4 communicates with an unauthorized server and that app #4 has executed a security attack and is suspected of wiretapping execution.

Hereafter, the processing performed by detection system 10 is described.

FIG. 3 is a flowchart of processing relating to communication monitoring performed by detection system 10 according to the present embodiment. FIG. 4 is an explanatory diagram illustrating an authorized-server list according to the present embodiment. FIG. 5 is an explanatory diagram illustrating an unauthorized-server list according to the present embodiment. The processing relating to communication monitoring performed by external communication monitor 11 is described with reference to FIG. 3, FIG. 4, and FIG. 5.

In Step S101, determiner 13 determines whether communication between terminal 22 and an external device (this communication corresponds to the external communication) is detected. To be more specific, determiner 13 obtains, from external communication monitor 11, capture data on packets transferred over the communication line that connects base station 20 to network N2. When determining that the packets include a packet relating to the communication between terminal 22 and the external device, determiner 13 determines that the external communication is detected. The external device can be authorized server 31 or unauthorized server 32. When it is determined that the external communication is detected (Yes in Step S101), the processing proceeds to Step S102. Otherwise (No in Step S101), Step S101 is executed again.

In Step S102, determiner 13 determines whether a communication partner of the external communication targeted for the determination in Step S101 is unauthorized server 32. This determination can be made by using the authorized-server list (see FIG. 4). The authorized-server list includes an IP address (such as 123.45.67.89 in the example illustrated in FIG. 4) of at least one server that is previously approved as authorized server 31. When the IP address of the communication partner of the external communication targeted for the determination in Step S101 is not included in the authorized-server list, determiner 13 determines that the communication partner of the external communication is unauthorized server 32. When it is determined that the communication partner of the external communication is unauthorized server 32 (Yes in Step S102), the processing proceeds to Step S103. Otherwise (No in Step S102), Step S101 is executed again.

Note that authorized server 31 can be the communication partner of the communication performed by terminal 22 that is in an initial state. The initial state refers to a state where an OS and an app provided together with the OS have been installed and app 23 has yet to be installed. Examples of the server that can be previously approved as authorized server 31 can include: a server that distributes an app that runs on the OS; and a server that distributes time information. By determining the communication partner of the communication performed by terminal 22 in the initial state, determiner 13 is able to generate the authorized-server list in advance. Note that, together with or in place of the above, the authorized-server list may include a server approved as an authorized server by an administrator.

In Step S103, determiner 13 determines that the external communication targeted for the determination in Step S101 is the communication between terminal 22 and unauthorized server 32. Moreover, determiner 13 determines that the communication partner of the external communication is unauthorized server 32. Furthermore, determiner 13 determines that this communication relates to a security attack and thus registers the communication partner of this external communication into the unauthorized-server list (see FIG. 5). The unauthorized-server list includes an IP address (such as 98.76.54.32 in the example illustrated in FIG. 5) of a server determined to be an unauthorized server. The communication between terminal 22 and unauthorized server 32 can include: issuance of an unauthorized-operation instruction from unauthorized server 32 to terminal 22; or provision of unauthorized-operation information from terminal 22 to unauthorized server 32. The unauthorized-operation information includes the IP address or model name of device 21 found in a port scan (described later) performed by terminal 22, for example.

In Step S104, determiner 13 determines that app 23 installed on terminal 22 is an unauthorized-server communication app. Determiner 13 updates the information on the presence or absence of communication with the unauthorized server in the app list to information indicating that app 23 has communicated with unauthorized server 32.

After the end of Step S104, Step S101 is executed again.

FIG. 6 is a flowchart of processing performed by detection system 10 to detect a host scan, according to the present embodiment.

In Step S201, determiner 13 determines whether communication in which a transmission source is terminal 22 is detected. To be more specific, determiner 13 obtains, from internal communication monitor 12, capture data on a packet transmitted or received over network N1. When determining that the transmission source of the packet is terminal 22, determiner 13 determines that the communication in which the transmission source is terminal 22 is detected.

In Step S202, determiner 13 determines whether the communication detected in Step S201 is performed for a host scan. When it is determined that this communication is performed for the host scan (Yes in Step S202), the processing proceeds to Step S203. Otherwise (No in Step S202), Step S201 is executed again.

A host scan can be performed for the purpose of finding a communication device present within network N1. More specifically, a host scan can be performed by an unauthorized app for the purpose of finding an attack target.

One example of the host scan is a ping scan. A ping scan is performed by sending an echo request (a so-called ping request) using an internet control message protocol (ICMP) echo request message sequentially to at least one destination corresponding to at least one IP address that can be within network N1. Note that another example of the host scan is performed by using an address resolution protocol (ARP) request.

In Step S203, determiner 13 determines that app 23 installed on terminal 22 is a scan execution app. Moreover, determiner 13 determines a time of the executed host scan. Determiner 13 updates the information on the presence or absence of a scan execution app to information indicating that app 23 has executed the scan.

After the end of Step S203, Step S201 is executed again.

FIG. 7 is a flowchart of processing performed by detection system 10 to determine an ephemeral port, according to the present embodiment. FIG. 8 is an explanatory diagram illustrating a port list indicating the ephemeral ports of device 21 according to the present embodiment. The processing performed by detection system 10 to determine the ephemeral port is described with reference to FIG. 7 and FIG. 8.

In Step S301, determiner 13 determines whether communication between device 21 and authorized server 31 (this communication corresponds to the authorized communication) is detected. To be more specific, determiner 13 obtains, from external communication monitor 11, capture data on packets transferred over the communication line that connects base station 20 to network N2. When determining that the packets include a packet relating to the communication between device 21 and authorized server 31, determiner 13 determines that the communication between device 21 and authorized server 31 is detected. The communication between device 21 and authorized server 31 can include: issuance of an authorized-operation instruction from authorized server 31 to device 21; or provision of authorized-operation information from device 21 to authorized server 31. When it is determined that the communication between device 21 and authorized server 31 is detected (Yes in Step S301), the processing proceeds to Step S302. Otherwise (No in Step S301), Step S301 is executed again.

In Step S302, determiner 13 determines, as the ephemeral port, the port used by device 21 in the communication detected in Step S301. Moreover, determiner 13 determines a time of the communication detected in Step S301. Determiner 13 registers the determined ephemeral port and the time of the communication into the port list (see FIG. 8). Note that when the identical ephemeral port is already registered in the port list, the time corresponding to this ephemeral port is updated.

The port list illustrated in FIG. 8 indicates that device 21 has communicated with authorized server 31 using the ephemeral port with number 49513 at 07:05:03.001 on January 5, 2022, for example.

Note that the port list is updated whenever the authorized communication is detected in Step S301. Of the information included in the port list, information obtained a predetermined time period or longer before the current time may be deleted by determiner 13. Although the predetermined time period may be substantially from several seconds to several minutes for example, this is not intended to be limiting.

Note that when a plurality of devices 21 are present, the port list is prepared for each of the plurality of devices 21.

FIG. 9 is a flowchart of processing performed by internal communication monitor 12 to detect an attack and wiretapping, according to the present embodiment.

In Step S401, determiner 13 determines whether communication from terminal 22 to device 21 is detected. To be more specific, determiner 13 obtains, from internal communication monitor 12, capture data on a packet transmitted or received over network N1. When determining that a transmission source of the packet is terminal 22 and that the destination of the packet is device 21, determiner 13 determines that the communication from terminal 22 to device 21 is detected. When it is determined that the communication from terminal 22 to device 21 is detected (Yes in Step S401), the processing proceeds to Step S402. Otherwise (No in Step S401), Step S401 is executed again.

In Step S402, determiner 13 determines whether the destination port of the communication targeted for the determination in Step S401 is an ephemeral port of device 21. This determination can be made by using the port list indicating the ephemeral ports of device 21 (see FIG. 8). Determiner 13 determines whether the destination port of the communication targeted for the determination in Step S401 is included among the ephemeral ports of device 21 in the communication log. When it is determined that the destination port of the communication is the ephemeral port of the device 21 (Yes in Step S402), the processing proceeds to Step S403. Otherwise (No in Step S402), Step S401 is executed again.

In Step S403, determiner 13 determines whether the time of the communication performed using the ephemeral port targeted for the determination in Step S402 as the destination port is within a reference time period after the time of the latest authorized communication. The time of the latest authorized communication may be obtained from the time of the communication performed using the ephemeral port that is included in the port list of device 21 illustrated in FIG. 8 and that is targeted for the determination in Step S402. Although the reference time period may be about one second for example, this is not intended to be limiting. When it is determined that the time of the communication is within the reference time period after the time of the latest authorized communication (Yes in Step S403), the processing proceeds to Step S404. Otherwise (No in Step S403), Step S401 is executed again.

Note that Step S403 need not be performed. When Step S403 is not executed and determiner 13 determines that the destination port of the communication is the ephemeral port of device 21 in Step S402 (Yes in Step S402), the processing proceeds to Step S404.

In Step S404, determiner 13 determines that app 23 installed on terminal 22 is a security-attack execution app, or more specifically, an app having a function of making a security attack. In this case, the communication performed using the ephemeral port targeted for the determination in Step S402 as the destination port corresponds to a security attack. Determiner 13 updates the information on the presence or absence of an attack execution app in the app list to information indicating that app 23 has made the security attack.

Note that the aforementioned security attack is assumed to be triggered when terminal 22 (or app 23) finds the latest authorized communication and then determines the ephemeral port of device 21 used in this authorized communication. To define the security attack as being triggered by the authorized communication depending on how much time has passed after this authorized communication, the reference time period used in Step S403 can be adjusted.

In Step S405, determiner 13 determines whether the time of the security attack is within a reference time period after the last host scan performed before this security attack. The time of the security attack is the time of the communication in which the ephemeral port targeted for the determination in Step S402 is used as the destination port. The time of the host scan is the time at which the communication to perform the host scan is detected (Step S202 and Step S203 in FIG. 6). Although the reference time period may be substantially from several minutes to several hours for example, this is not intended to be limiting. When it is determined that the time of the security attack is within the reference time period after the last host scan (Yes in Step S405), Step S401 is executed again. Otherwise (No in Step S405), the processing proceeds to Step S406.

In Step S406, determiner 13 determines that app 23 installed on terminal 22 is suspected of wiretapping execution, or more specifically, that app 23 is an app suspected of having a wiretapping function. This is because, as it is determined in Step S404 and Step S405 that terminal 22 (or app 23) has made the security attack without performing the host scan, terminal 22 (or app 23) is highly likely to find, by wiretapping, device 21 that is an attack target. Determiner 13 updates the information on the presence or absence of an app suspected of wiretapping execution in the app list to information indicating that app 23 is suspected of wiretapping the communication.

After the end of Step S406, Step S401 is executed again.

The processes of Step S404 and Step S405 allow determiner 13 to determine that the first communication includes an attack and, when it is determined that the internal communication does not include the packet relating to the host scan, to determine that terminal 22 is suspected of the wiretapping attack.

Furthermore, the processes of Step S403 to Step S405 allow determiner 13 to determine that the first communication includes the attack and that the internal communication does not include the packet relating to the host scan. Furthermore, the processes allow determiner 13 to determine, when it is determined that the time difference between the communication from device 21 to authorized server 31 and the attack included in the first communication is within the reference time period, that terminal 22 is suspected of the wiretapping attack.

As described thus far, detection system 10 is capable of appropriately detecting the security attack made on device 21 by terminal 22 (or app 23) via the communication.

Each of the constituent elements in the above embodiment may be configured in the form of an exclusive hardware product, or may be realized by executing a software program suitable for the constituent element. Each of the constituent elements may be realized by means of a program executing unit, such as a Central Processing Unit (CPU) or a processor, reading and executing the software program recorded on a recording medium such as a hard disk or semiconductor memory.

To be more specific, this program causes a computer to execute a detection method that is executed by a detection system to detect an attack. The detection method includes: at least monitoring a first communication performed from a terminal to a client device; making a determination whether the first communication monitored in the monitoring includes an attack made on the client device by the terminal; and outputting information indicating a result of the determination. In the making, when it is determined that the first communication is from the terminal to an ephemeral port of the client device, it is determined that the first communication includes the attack.

Although the detection system and the like according to one or more aspects of the present disclosure have been described based on the embodiment, the present disclosure is not limited to this embodiment. Those skilled in the art will readily appreciate that embodiments arrived at by making various modifications to the above embodiment or embodiments arrived at by selectively combining constituent elements disclosed in the above embodiment without materially departing from the scope of the present disclosure may be included within one or more aspects of the present disclosure.

### [Industrial Applicability]

The present invention is applicable to a system that detects an app that executes a security attack.

### [Reference Signs List]

- 1: communication system
- 10: detection system
- 11: external communication monitor
- 12: internal communication monitor
- 13: determiner
- 14: storage
- 15: outputter
- 20: base station
- 21: device
- 22: terminal
- 23: app
- 31: authorized server
- 32: unauthorized server
- 231: authorized app
- 232: unauthorized app
- N1, N2: network

## Claims

1. A detection system comprising:
a monitor that at least monitors a first communication performed from a terminal to a client device;
a determiner that determines whether the first communication monitored by the monitor includes an attack made on the client device by the terminal; and
an outputter that outputs information indicating a result of the determining by the determiner,
wherein when the determiner determines that the first communication is from the terminal to an ephemeral port of the client device, the determiner determines that the first communication includes the attack.

2. The detection system according to claim 1,
wherein the monitor further monitors a second communication that is from the client device to a communication device that is connected via an external network, and
when the second communication includes a communication from the client device to a predetermined authorized server,
the determiner further
obtains, from the client device, a port of the client device that is used in the second communication, and
determines, based on the port as the ephemeral port, whether the first communication includes the attack.

3. The detection system according to claim 2,
wherein the monitor further
monitors a third communication between the terminal and a communication device that is connected via an external network, and
the determiner further
determines whether the third communication includes a communication performed from the terminal to an unauthorized server that is different from the predetermined authorized server, and
determines that the third communication relates to the attack when the determiner determines that the third communication includes the communication performed from the terminal to the unauthorized server.

4. The detection system according to any one of claims 1 to 3,
wherein the monitor further
monitors an internal communication performed from the terminal to a destination having an address included in an internal network, and
the determiner further
determines whether the internal communication includes a packet relating to a host scan for the internal network.

5. The detection system according to claim 4,
wherein when the determiner determines that the first communication includes the attack and that the internal communication does not include the packet relating to the host scan, the determiner determines that the terminal is suspected of a wiretapping attack.

6. The detection system according to claim 2,
wherein the monitor further
monitors an internal communication performed from the terminal to a destination having an address included in an internal network, and
the determiner further
determines whether the internal communication includes a packet relating to a host scan for the internal network, and
when the determiner determines that the first communication includes the attack, that the internal communication does not include the packet relating to the host scan, and that a time difference between the communication from the client device to the predetermined authorized server and the attack included in the first communication is within a reference time period,
determines that the terminal is suspected of a wiretapping attack.

7. The detection system according to claim 1,
wherein application software for performing the first communication is installed on the terminal, and
when the determiner determines that the first communication includes the attack, the determiner determines that the application software has a function of making an attack.

8. A detection method executed by a detection system to detect an attack, the detection method comprising:
at least monitoring a first communication performed from a terminal to a client device;
determining whether the first communication monitored in the monitoring includes an attack made on the client device by the terminal; and
outputting information indicating a result of the determining,
wherein in the determining, when it is determined that the first communication is from the terminal to an ephemeral port of the client device, it is determined that the first communication includes the attack.

9. A program for causing a computer to execute the detection method according to claim 8.
